# EUROPEAN PATENT SPECIFICATION

(11) **EP 2 183 332 B1**
(45) Date of publication and mention of the grant of the patent: **06.11.2013**
(21) Application number: 08794609.1
(22) Date of filing: 21.07.2008
(51) Int. Cl.: C09K 3/10, C08G 18/38, C08G 18/40, C08L 75/08

(54) **HYDROPHILIC SEALANTS**
HYDROPHILE DICHTUNGSMITTEL
ADHÉSIFS HYDROPHILES

(30) Priority: 26.07.2007 US 881651
(43) Date of publication of application: 12.05.2010
(73) Proprietor: Bayer MaterialScience LLC, Pittsburgh, PA 15205-9741 (US)
(72) Inventor: JOHNSTON, Jay, A., Clinton, PA 15026, (US); THOMPSON-COLON, James, A., Moon Township, PA 15108-9207 (US)
(74) Representative: BIP Patents
(86) International application number: PCT/US2008/008846
(87) International publication number: WO 2009/017618

(56) References cited:
- EP-A2- 0 372 561
- WO-A1-01/16201
- WO-A1-98/18843
- JP-A- H06 287 538
- US-A- 3 632 557
- US-A- 6 046 295
- US-A1- 2005 215 701
- US-A1- 2007 060 714
- US-A1- 2007 066 768
- US-B2- 7 067 563

## Description

### FIELD OF THE INVENTION

The present invention relates in general to sealants, and more specifically, to hydrophilic one-component polyurethane sealants which incorporate ethylene oxide content into the polymeric backbone.

### BACKGROUND OF THE INVENTION

Among the problems associated with applying a polyurethane sealant to a wet surface, or in an environment with a high relative humidity, is that the presence of water can lead to foaming. Further, such sealants may be desired for surfaces which are in contact with water or underwater that are still capable of curing in such surroundings.

A number of workers in the art have attempted to provide such sealants. For example, DE 199 28 169 in the name of Mang et al., describes a sealing composition made from a polymer forming matrix and saccharides/inorganic clay and a highly absorbent polymer. The matrix contains oligomers and/or polymers which form elastomers under the influence of moisture and along with crosslinkers and a particulate material that takes up water from: (A) polysaccharides or (B) a water-absorbent polymer selected from (meth)acrylate ester polymers, (meth)acrylic acid polymers, (meth)acrylate salt polymers, acrylamide polymer, polyols and grafted starch or cellulose. The storage stability and water-swellability of the sealant are said to be improved by using a combination of an oligomer and(or) a polymer and a crosslinking agent forming a water-swelling rubber as the matrix.

Teramoto, in JP 6287538, reports a one-component moisture-curable water-swellable sealing material made from a water-swellable urethane prepolymer obtained by reacting at least one polyether polyol of the general formula: R[(OR₁)nOH]p [wherein R is a residue of a polyhydric alcohol; (OR₁ is a polyoxyalkylene chain with oxyethylene units and C₃-C₄ oxyalkylene units, n is the degree of polymerization corresponding to an OH value of 500-5,000; and p is an integer of 2-4] with an aromatic polyisocyanate and has a polyoxyethylene content of 10-50 wt.% and a terminal isocyanate group content of 0.5-3.%, a monoisocyanate of the general formula: R-NCO having 10% or higher terminal isocyanate groups, a filler, a plasticizer, and a solvent.

JP 6056955 in the name of Kunugiza, discloses a one part water-swelling polyurethane composition made from an organic isocyanate compound and an adduct of an organic polyhydroxyl compound with calcium chloride. The composition of Kunugiza is said to be useful as a sealant.

Fukushima et al., in JP 62025186, describe a sealant having water swelling characteristics with minimal shrinkage. The sealant is made from (A) a moisture-curing water swelling one-pack type polyurethane prepolymer made of (i) a water swelling polyurethane prepolymer having 1.5-10% terminal NCO group content, (ii) a terminal NCO group-containing water unswelling polyurethane prepolymer and (iii) an inorganic additive) and (B) a hydraulic substance (preferably hydraulic cement).

JP 60076588 in the name of Miyamoto et al., discloses water-swelling joint sealing material having improved water resistance, made of a water-swelling urethane resin made of an active hydrogen component having a polyoxyalkylene ether, etc. and an organic polyisocyanate component. The sealants of Miyamoto et al. as said to be capable of forming a water-tight seal in steel segment joints.

Roesler et al., in U.S. Pat. No. 6,077,902, describe moisture-curable compounds containing aromatically-bound isocyanate groups and alkoxysilane groups incorporated through aspartate groups, which can be cured in the presence of moisture to form coatings, adhesives and sealants.

U.S. Pat. No. 6,005,047, issued to Shaffer et al., discloses moisture-curable compounds containing (cyclo)aliphatically-bound isocyanate groups and alkoxysilane groups incorporated through aspartate groups, which can be cured in the presence of moisture to form coatings, adhesives and sealants.

Thus, a need continues to exist in the art for hydrophilic sealant materials that are capable of curing in a high humidity environment, up to and including underwater, while maintaining the materials' physical characteristics such as hardness without foaming.

### SUMMARY OF THE INVENTION

Accordingly, the present invention provides polyurethane hydrophilic sealants incorporating ethylene oxide content into the polymer backbone. The inventive one-component polyurethane sealants combine a silane-terminated prepolymer ("STP") with a high ethylene oxide content polyol or monool. The sealants of the present invention are capable of curing in a high humidity environment (including underwater) and maintaining usable physical characteristics such as hardness without foaming. After curing, the inventive sealants swell in water, thus acting as waterstops.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages, OH numbers, functionalities and so forth in the specification are to be understood as being modified in all instances by the term "about." Equivalent weights and molecular weights given herein in Daltons (Da) are number average equivalent weights and number average molecular weights respectively, unless indicated otherwise.

The present invention provides a one-component hydrophilic polyurethane sealant containing a silane-terminated polyurethane prepolymer, a compound having an ethylene oxide content of at least 40 wt.%, based on the weight of the compound and a catalyst, optionally, one or more of plasticizers, fillers, pigments, drying agents, light stabilizers, antioxidants. thixotropic agents and bonding agents, wherein the one-component hydrophilic polyurethane sealant increases at least 1.4% by weight and at least 2.5% by volume upon exposure to water for 24 hours.

The present invention also provides a process for the production of a one-component hydrophilic polyurethane sealant involving combining a silane-terminated polyurethane prepolymer; and a compound having an ethylene oxide content of at least 40 wt.%, based on the weight of the compound, a catalyst, optionally, one or more of plasticizers, fillers, pigments, drying agents, light stabilizers, antioxidants. thixotropic agents and bonding agents, wherein the one-component hydrophilic polyurethane sealant increases at least 1.4% by weight and at least 2.5% by volume upon exposure to water for 24 hours.

The present invention further provides a one-component hydrophilic polyurethane sealant containing a silane-terminated polyurethane prepolymer having an ethylene oxide content of at least 40 wt.%, based on the weight of the prepolymer, and a catalyst, optionally, one or more of plasticizers, fillers, pigments, drying agents, light stabilizers, antioxidants. thixotropic agents and bonding agents, wherein the one-component hydrophilic polyurethane sealant increases at least 1.4% by weight and at least 2.5% by volume upon exposure to water for 24 hours.

The present inventors also contemplate the production of hybrid sealants made from the reaction product of a silane-terminated polyurethane prepolymer and a blend of polyoxyethylene-containing amines and polyols.

Silane-terminated polyurethane prepolymers ("STPs") suitable in the one-component polyurethane sealants of the present invention are disclosed e.g., in U.S. Pat. Nos. 6,001,946; 6,265,517; 6,545,087; and 6,887,964. Alkoxysilane-functional polyurethanes that crosslink via silane polycondensation are well-known to those skilled in the art. A review article on this topic may be found in "Adhesives Age" 4/1995, page 30 ff. (authors: Ta-Min Feng, B. A. Waldmann). Particularly preferred alkoxysilane prepolymers for use in the inventive one-component polyurethane sealants may be made according to U.S. Published Patent Application No. 2007/0055035.

The inventive water swellable sealants are prepared by incorporating polyols or monools containing ethylene oxide ("EO") into the backbone of the polymer. The present inventors have surprisingly discovered that blending a high EO content polyol or monool with a silane-terminated polyurethane prepolymer provides a one-component sealant which moisture cures with water from the air. If the cured blend is placed in water, the material absorbs water and swells. The inventors have also found that a portion of the EO content can be incorporated into the silane-terminated prepolymer.

By high ethylene oxide-content polyols and monools, the present inventors mean those polyols and monools having an EO content of at least 40 wt.%, more preferably at least 60 wt.%, even more preferably at least 70 wt.%, and most preferably at least 80 wt.%, based on the weight of the polyol or monool. Such compounds may be obtained by various methods known to those skilled in the art. The ethylene oxide may be present in an amount ranging between any combination of these values, inclusive of the recited values. The high EO content polyol or monool may be included in amounts up to 70 wt.%, more preferably from 5 to 45 wt.% and most preferably from 15 to 35 wt.% of the total formulation. The high EO content polyol or monool may be present in the sealants of the present invention in an amount ranging between any combination of these values, inclusive of the recited values. The high EO content polyol or monool preferably has a number averaged molecular weight of from 500 to 18,000; more preferably from 1,500 to 7,500; and most preferably from 3,500 to 5,500. The number averaged molecular weight of the high EO content polyol or monool used in producing the sealants of the present invention may be in an amount ranging between any combination of these values, inclusive of the recited values. The high EO content polyol or monool may preferably be silane-terminated or the reaction product of a polyol or monool and an isocyanate-silane.

The prepolymers and polyols may be formulated together with customary plasticizers, fillers, pigments, drying agents, additives, light stabilizers, antioxidants. thixotropic agents or bonding agents, and optionally with other adjuvant substances and additives, for the production of the inventive one-component sealants.

Calcium carbonate is optionally included in the inventive one-component polyurethane sealant in an amount of preferably from 30 to 70 wt.%, and more preferably from 40 to 60 wt.%. The calcium carbonate may be present in the one-component polyurethane sealant of the present invention in an amount ranging between any combination of these values, inclusive of the recited values.

Examples of other suitable fillers for use in the inventive sealants include carbon black, precipitated hydrated silicas, mineral chalk materials and precipitated chalk materials. Examples of suitable plasticizers include phthalic acid esters, adipic acid esters, alkylsulphonic acid esters of phenol, or phosphoric acid esters. Examples of thixotropic agents include pyrogenic hydrated silicas, polyamides, products derived from hydrogenated castor oil, and also polyvinyl chloride. Organotin compounds and amine catalysts can be cited as suitable catalysts for the curing reaction of the sealants of the present invention. Examples of organotin compounds include: dibutyltin diacetate, dibutyltin dilaurate, dibutyltin bis-acetoacetonate and tin carboxylates, such as tin octoate for example. The aforementioned tin catalysts can optionally be used in combination with amine catalysts.

The inventive-sealants swell, i.e., undergo an increase of at least 1.4% by weight and at least 2.5% by volume, more preferably at least 5% by weight and at least 5% by volume and most preferably at least 10% by weight and at least 10% by volume upon exposure to water for 24 hours. The increases in weight and volume may be in an amount ranging between any combination of these values, inclusive of the recited values. This swelling is even more pronounced at longer periods of exposure to water.

The present inventors contemplate that the inventive sealants may find use on a variety of wet surfaces and/or in high humidity environments, including use in underwater applications. The inventive sealants may also find use is such applications as the multi-layered device for post-installation *in-situ* barrier creation described in U.S. Published Patent Application 2006/0191224.

### EXAMPLES

The present invention is further illustrated, but is not to be limited, by the following examples. All quantities given in "parts" and "percents" are understood to be by weight, unless otherwise indicated.
- PREPOLYMER A: a silane-terminated polyurethane prepolymer which is the reaction product of a high molecular weight polyol and an isocyanatopropyltrimethoxysilane made according to U.S. Published Patent Application No. 2007/0055035;
- PREPOLYMER B: a silane-terminated polyurethane prepolymer which is the reaction product of an isocyanatopropyltrimethoxysilane and an all PO diol;
- PREPOLYMER C: a silane-terminated polyurethane prepolymer which is the reaction product of an isocyanatopropyltrimethoxysilane and a 40% EO content polyol;
- POLYOL A: a polyether polyol having a hydroxyl number of about 37.0, prepared by KOH-catalyzed alkoxylation of glycerin with a block of propylene oxide (4.9 wt.% of the total oxide), followed by a mixed block of propylene oxide (62.7 wt.% of the total oxide) and ethylene oxide (22.4 wt.% of the total oxide), finished with a block of ethylene oxide (10 wt.% of the total oxide);
- ANTIOXIDANT: a hindered phenol antioxidant available from Ciba Specialty Chemicals as IRGANOX 1135;
- PLASTICIZER: benzyl butyl phthalate available from LANXESS as UNIMOL BB;
- SILANE A: the reaction product of isocyanatopropyltrimethoxysilane with a poly(oxyethylene);
- SILANE B: a mono functional silane terminated oligomer which is the reaction product of isocyanatopropyltrimethoxysilane with a propoxylated alcohol;
- SILANE C: a polyethyleneglycol-functional alkoxysilane available from Degussa as DYNASYLAN 4144;
- SILICA: fumed silica treated with dimethyl silicone fluid to replace surface hydroxyl groups with a polydimethylsiloxane polymer, available from Cabot as CAB-O-SIL TS-720;
- FILLER A: precipitated calcium carbonate, available from Specialty Minerals as ULTRA-PFLEX;
- FILLER B: ground calcium carbonate, available from Imerys as DRIKALITE;
- PIGMENT A: titanium dioxide pigment, available from Huntsman as TIOXIDE TR93;
- CATALYST A: 1,5-diazabicyclo[4.3.0] non-5-ene, available from Acros Organics as NBU;
- CATALYST B: dibutyltin dilaurate, available from Air Products as DABCO T-12;
- STABILIZER A: a hindered amine light stabilizer ("HALS") available from Ciba Specialty Chemicals as TINUVIN 292;
- STABILIZER B: a UV stabilizer available from Ciba Specialty Chemicals as TINUVIN 1130; and
- WETTING AGENT: available from Lanxess as BORCHI GEN DFN.

### Examples C1, 2, C3 and 4

Table I summarizes the formulations of a one-component polyurethane sealants made from a high ethylene oxide content polyol and a silane-terminated prepolymer. Table I also provides the resultant hardness, weight gain and volume gain after the sealant was exposed to water for the times indicated. ASTM D570 was used to determine weight and volume gain.

The one-component resin prepared in Example 2 moisture cured with water from the air. When the cured blend was placed in water, it absorbed water and swelled. A silane-terminated prepolymer Comparative Example C1, which was not blended with a high ethylene oxide content polyol, swelled only slightly when placed in water.

This was repeated in a one-component sealant formulation. The sealant of Comparative Example C3 was prepared from a silane-terminated prepolymer, catalyst, calcium carbonate, and a plasticizer. This mixture was allowed to moisture cure with the humidity in the air. The cured sealant was placed in water and absorbed only a small amount. The sealant of Example 4 was prepared from the same silane-terminated prepolymer, catalyst, calcium carbonate, but with a high ethylene oxide content polyol included. This sealant was also allowed to moisture cure in the air and when placed in water the sealant swelled (increased weight and volume) as can be appreciated by reference to Table I.

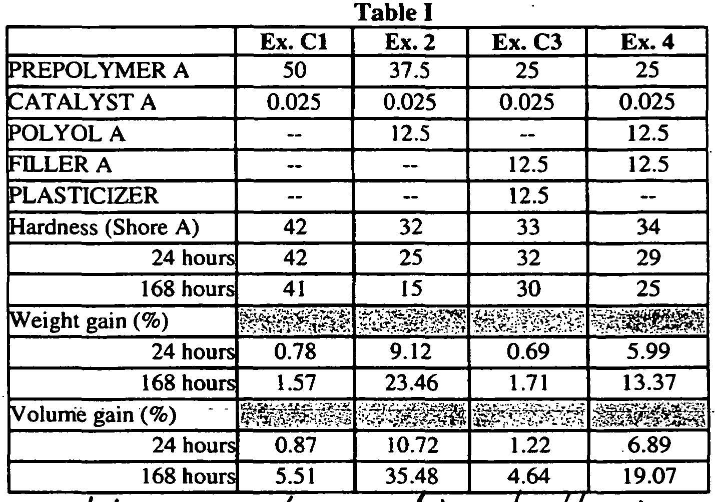

Ex. 2 and 4 are not according to the invention.

### Examples C5, 6, 7, C8, 9 and 10

Table II summarizes the formulations of one-component sealants made from the same silane-terminated prepolymer as used in the previous examples and an ethylene oxide-containing silane-terminated monol. Table II also presents the resultant hardness, weight and volume gains after exposure of the resultant sealant to water for the times indicated (ASTM D570).

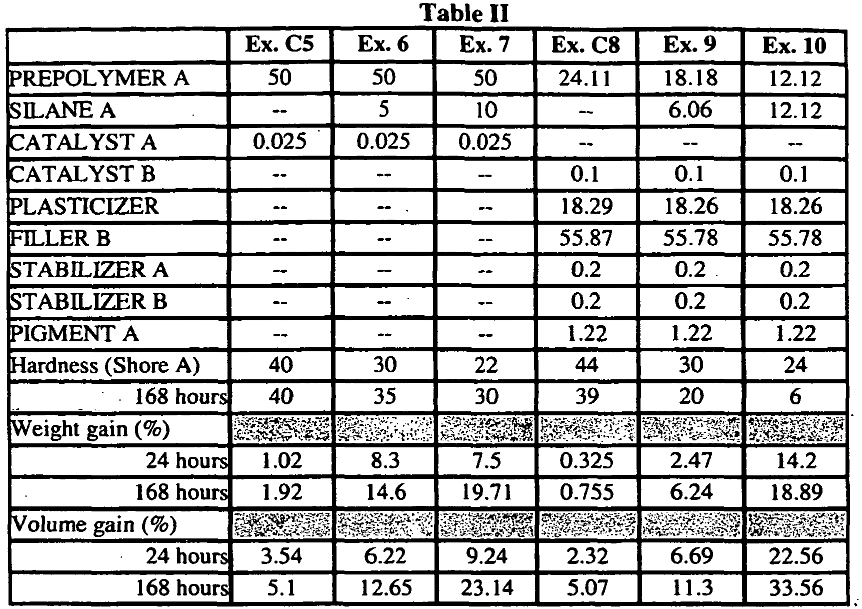

As can be appreciated by reference to Table II, those sealants containing the ethylene oxide-containing silane-terminated monol experienced greater amounts of swelling upon exposure to water, with those containing higher amounts of ethylene oxide monol showing correspondingly higher swelling.

### Examples C11 and 12-15

Table III summarizes the formulations of one-component polyurethane sealants made from the same silane-terminated prepolymer as used in the previous examples and a different ethylene oxide-containing silane. Table III also provides the resultant hardness, weight and volume gains after exposure of the resultant sealants to water for the times indicated (ASTM D570). Tensile strength, elongation and tear strength were also measured for these sealants and are presented in Table III.

As is demonstrated by Table III, the ability of the inventive sealant to absorb water was closely correlated to the amount of ethylene oxide-containing silane added to the formulation.

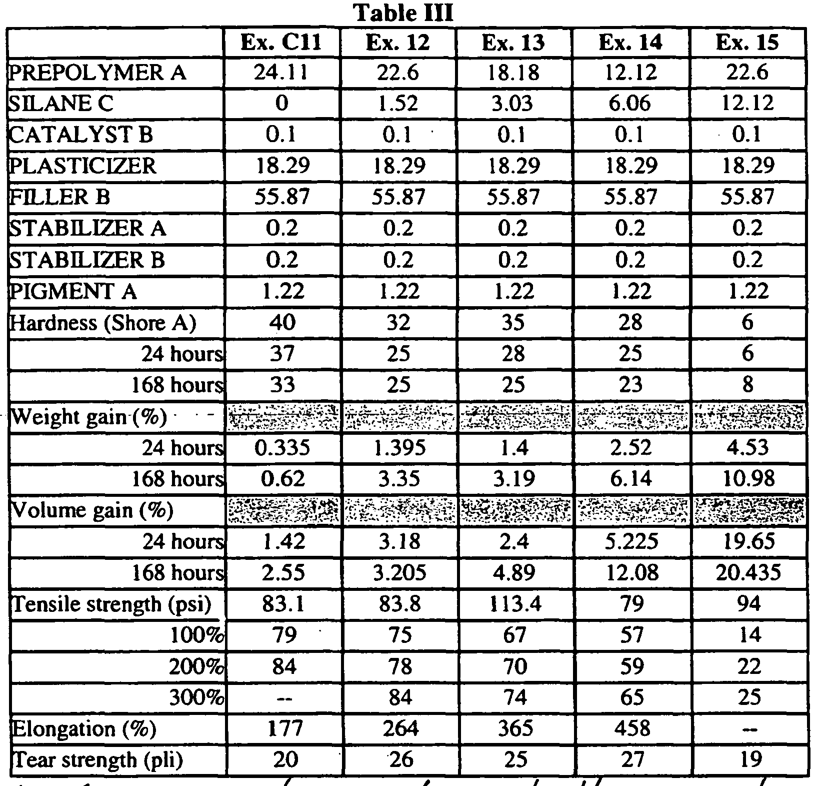

Ex. 12-15 are not according to the invention.

### Examples C16 and 17-19, C20, 21 and 22

Table IV summarizes the formulations of one-component polyurethane sealants made from an all propylene oxide containing silane monol and the same silane-terminated prepolymer used in the previous examples. Table IV also provides the resultant hardness, weight and volume gains after exposure of the sealant to water for the times indicated (ASTM D570).

As can be appreciated by reference to Table IV, those sealants made with increasing amounts of the all propylene oxide monol showed relatively little increase in swelling as did the sealants made with calcium carbonate filler and increasing amounts of all propylene oxide monol. These results further bolster the inventors' supposition that the ethylene oxide content of the polymer backbone is responsible for the observed increase in swelling upon exposure of the sealant to water.

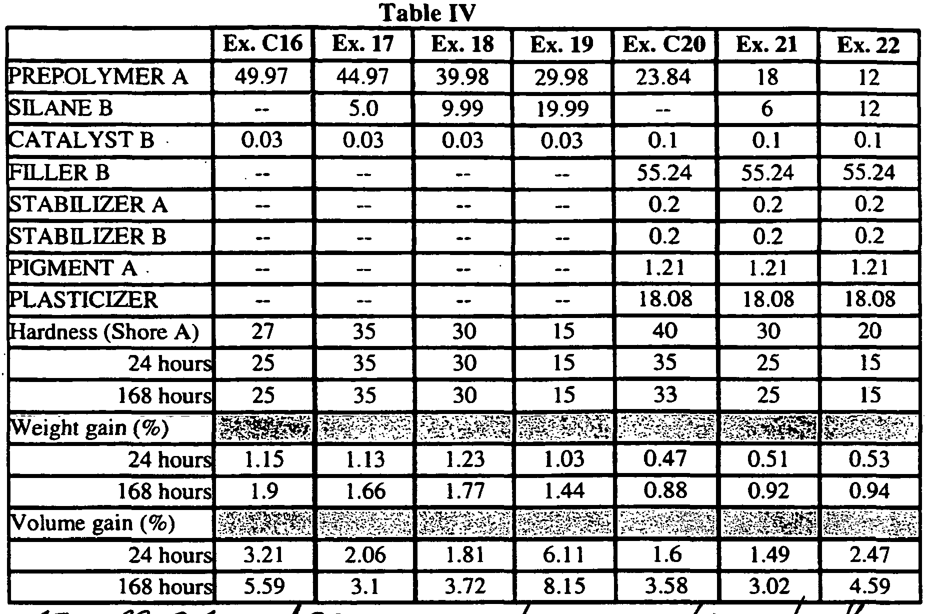

Ex. 17-19, 21 and 22 are not according to the invention.

### Examples C23, 24, C25 and 26

Table V summarizes the formulations of one-component polyurethane sealants made from silane-terminated prepolymers which contained either 40% ethylene oxide content or all propylene oxide. Table V also provides the resultant hardness, weight and volume gains after exposure of the sealant to water for the times indicated (ASTM D570). Tensile strength, elongation and tear strength were also measure for these examples and are presented in Table V.

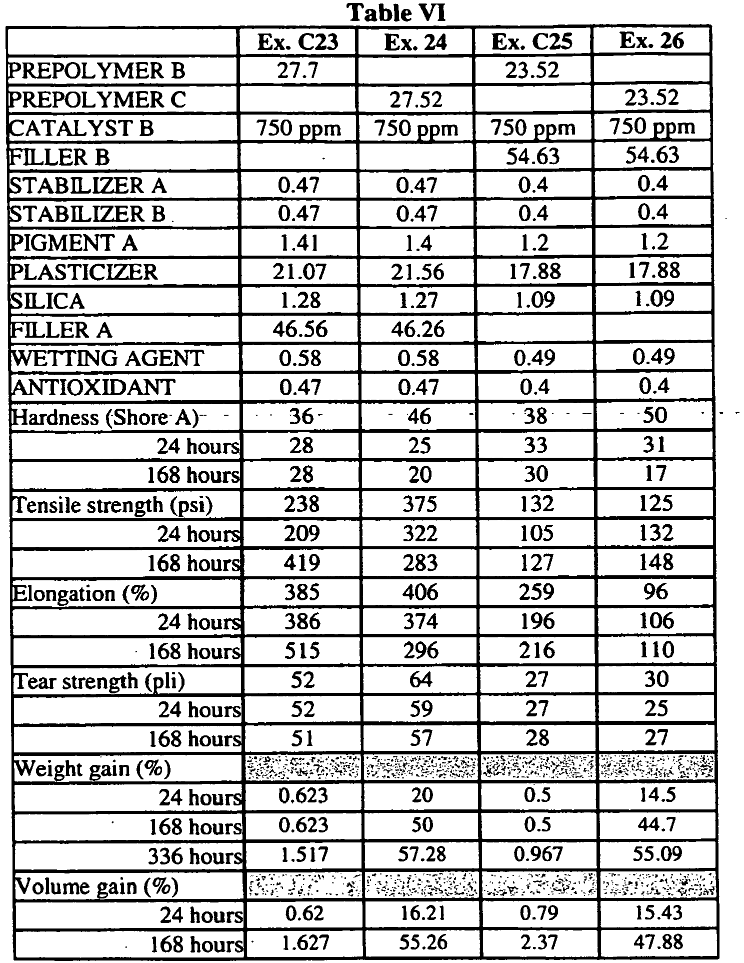

As is apparent by reference to Table V, the one-component polyurethane sealants made from a silane-terminated prepolymer which was made from a polyol having a 40% ethylene oxide content (Examples 24 and 26) experienced dramatic swelling without much change in the other observed physical properties as compared to the one-component polyurethane sealants made from a silane-terminated prepolymer which was made with an all propylene oxide polyol (Examples C23 and C25).

The foregoing examples of the present invention are offered for the purpose of illustration and not limitation.

## Claims

1. A one-component hydrophilic polyurethane sealant comprising:
a silane-terminated polyurethane prepolymer;
a compound having an ethylene oxide content of at least 40 wt.%, based on the weight of the compound; and
a catalyst,
optionally, one or more of plasticizers, fillers, pigments, drying agents, light stabilizers, antioxidants. thixotropic agents and bonding agents,
wherein the one-component hydrophilic polyurethane sealant increases at least 1.4% by weight and at least 2.5% by volume upon exposure to water for 24 hours as measured by ASTM D570.

2. The one-component hydrophilic polyurethane sealant according to Claim 1, wherein the compound having an ethylene oxide content has an ethylene oxide content of at least 60 wt.%, based on the weight of the compound.

3. The one-component hydrophilic polyurethane sealant according to Claim 1, wherein the compound having an ethylene oxide content has an ethylene oxide content of at least 70 wt.%, based on the weight of the compound.

4. The one-component hydrophilic polyurethane sealant according to Claim 1, wherein the compound having an ethylene oxide content has an ethylene oxide content of at least 80 wt.%, based on the weight of the compound.

5. The one-component hydrophilic polyurethane sealant according to Claim 1, wherein the compound having an ethylene oxide content is selected from the group consisting of ethylene oxide capped polyols, ethylene oxide monools, and ethylene oxide polyols.

6. The one-component hydrophilic polyurethane sealant according to Claim 1, wherein the compound having an ethylene oxide content is a mixture of ethylene oxide containing amines and polyols.

7. The one-component hydrophilic polyurethane sealant according to Claim 1, wherein the silane-terminated polyurethane prepolymer contains ethylene oxide.

8. The one-component hydrophilic polyurethane sealant according to Claim 1, wherein the sealant increases at least 5% by weight and at least 5% by volume upon exposure to water for 24 hours.

9. The one-component hydrophilic polyurethane sealant according to Claim 1, wherein the sealant increases at least 10% by weight and at least 10% by volume upon exposure to water for 24 hours.

## Patentansprüche

1. Einkomponentige hydrophile Polyurethandichtungsmasse, umfassend:
ein silanterminiertes Polyurethan-Präpolymer;
eine Verbindung mit einem Ethylenoxidgehalt von mindestens 40 Gew.-%, bezogen auf das Gewicht der Verbindung; und
einen Katalysator,
gegebenenfalls Weichmacher, Füllstoffe, Pigmente, Trocknungsmittel, Lichtschutzmittel, Antioxidantien, Thixotropiermittel und/oder Haftvermittler,
wobei die einkomponentige hydrophile Polyurethandichtungsmasse nach Einwirkung von Wasser über einen Zeitraum von 24 Stunden eine Gewichtszunahme von mindestens 1,4% und eine Volumenzunahme von mindestens 2,5% gemäß ASTM D570 aufweist.

2. Einkomponentige hydrophile Polyurethandichtungsmasse nach Anspruch 1, wobei die Verbindung mit einem Ethylenoxidgehalt einen Ethylenoxidgehalt von mindestens 60 Gew.-%, bezogen auf das Gewicht der Verbindung, aufweist.

3. Einkomponentige hydrophile Polyurethandichtungsmasse nach Anspruch 1, wobei die Verbindung mit einem Ethylenoxidgehalt einen Ethylenoxidgehalt von mindestens 70 Gew.-%, bezogen auf das Gewicht der Verbindung, aufweist.

4. Einkomponentige hydrophile Polyurethandichtungsmasse nach Anspruch 1, wobei die Verbindung mit einem Ethylenoxidgehalt einen Ethylenoxidgehalt von mindestens 80 Gew.-%, bezogen auf das Gewicht der Verbindung, aufweist.

5. Einkomponentige hydrophile Polyurethandichtungsmasse nach Anspruch 1, wobei die Verbindung mit einem Ethylenoxidgehalt aus der Gruppe bestehend aus Ethylenoxid-verkappten Polyolen, Ethylenoxid-Monoolen und Ethylenoxid-Polyolen ausgewählt ist.

6. Einkomponentige hydrophile Polyurethandichtungsmasse nach Anspruch 1, wobei es sich bei der Verbindung mit einem Ethylenoxidgehalt um eine Mischung von Ethylenoxid enthaltenden Aminen und Polyolen handelt.

7. Einkomponentige hydrophile Polyurethandichtungsmasse nach Anspruch 1, wobei das silanterminierte Polyurethan-Präpolymer Ethylenoxid enthält.

8. Einkomponentige hydrophile Polyurethandichtungsmasse nach Anspruch 1, wobei die Dichtungsmasse nach Einwirkung von Wasser über einen Zeitraum von 24 Stunden eine Gewichtszunahme von mindestens 5% und eine Volumenzunahme von mindestens 5% aufweist.

9. Einkomponentige hydrophile Polyurethandichtungsmasse nach Anspruch 1, wobei die Dichtungsmasse nach Einwirkung von Wasser über einen Zeitraum von 24 Stunden eine Gewichtszunahme von mindestens 10% und eine Volumenzunahme von mindestens 10% aufweist.

## Revendications

1. Matériau d'étanchéité polyuréthane hydrophile monocomposant comprenant :
un prépolymère de polyuréthane à terminaison silane ;
un composé ayant une teneur en oxyde d'éthylène d'au moins 40 % en poids relativement au poids du composé ; et
un catalyseur ;
éventuellement, un ou plusieurs parmi des plastifiants, des charges, des pigments, des agents de séchage, des stabilisateurs à la lumière, des antioxydants, des agents thixotropes et des liants,
le matériau d'étanchéité polyuréthane hydrophile monocomposant augmentant d'au moins 1,4 % en poids et d'au moins 2,5 % en volume quand il est exposé à l'eau pendant 24 heures, ces caractéristiques étant mesurées par la méthode ASTM D570.

2. Matériau d'étanchéité polyuréthane hydrophile monocomposant selon la revendication 1, dans lequel le composé ayant une teneur en oxyde d'éthylène a une teneur en oxyde d'éthylène d'au moins 60 % en poids, relativement au poids du composé.

3. Matériau d'étanchéité polyuréthane hydrophile monocomposant selon la revendication 1, dans lequel le composé ayant une teneur en oxyde d'éthylène a une teneur en oxyde d'éthylène d'au moins 70 % en poids, relativement au poids du composé.

4. Matériau d'étanchéité polyuréthane hydrophile monocomposant selon la revendication 1, dans lequel le composé ayant une teneur en oxyde d'éthylène a une teneur en oxyde d'éthylène d'au moins 80 % en poids, relativement au poids du composé.

5. Matériau d'étanchéité polyuréthane hydrophile monocomposant selon la revendication 1, dans lequel le composé ayant une teneur en oxyde d'éthylène est sélectionné dans le groupe constitué de polyols coiffés d'oxyde d'éthylène, de monools d'oxyde d'éthylène, et de polyols d'oxyde d'éthylène.

6. Matériau d'étanchéité polyuréthane hydrophile monocomposant selon la revendication 1, dans lequel le composé ayant une teneur en oxyde d'éthylène est un mélange d'amines et de polyols contenant de l'oxyde d'éthylène.

7. Matériau d'étanchéité polyuréthane hydrophile monocomposant selon la revendication 1, dans lequel le prépolymère de polyuréthane à terminaison silane contient de l'oxyde d'éthylène.

8. Matériau d'étanchéité polyuréthane hydrophile monocomposant selon la revendication 1, dans lequel le matériau d'étanchéité augmente d'au moins 5 % en poids et d'au moins 5 % en volume quand il est exposé à l'eau pendant 24 heures.

9. Matériau d'étanchéité polyuréthane hydrophile monocomposant selon la revendication 1, dans lequel le matériau d'étanchéité augmente d'au moins 10 % en poids et d'au moins 10 % en volume quand il est exposé à l'eau pendant 24 heures.
